# EUROPÄISCHE PATENTANMELDUNG

(11) **EP 3 103 931 A1**
(43) Veröffentlichungstag der Anmeldung: **14.12.2016**
(21) Anmeldenummer: 15181531.3
(22) Anmeldetag: 19.08.2015
(51) Int. Cl.: E03C 1/04, E03C 1/042, F16L 5/00, E03C 1/02, E03C 1/324

(54) **MONTAGEVORRICHTUNG FÜR EIN ARMATURENPANEEL**

(30) Priorität: 12.06.2015 EP 15171958
(71) Anmelder: Aqua Art AG, 8050 Zürich (CH)
(72) Erfinder: Curty, Paul, 8050 Zürich (CH)
(74) Vertreter: Dittmann, Rolf

(57) **Zusammenfassung**

Offenbart ist eine Montagevorrichtung für ein Armaturenpaneel, welche Montagevorrichtung ein Grundelement (20) und wenigstens ein Fluid-Anschlusselement (50) umfasst, wobei das Grundelement an einer Vorderseite Mittel (21, 22) zum Befestigen eines Armaturenpaneels sowie an einer Rückseite eine wenigstens im Wesentlichen ebene Anlagefläche umfasst,
in dem Grundelement wenigstens eine Durchgangsöffnung (23) für ein Befestigungsmittel angeordnet ist, die sich von der Rückseite des Grundelementes zur Vorderseite des Grundelementes erstreckt, derart, dass ein Befestigungsmittel an der wenigstens einen Durchgangsöffnung durch das Grundelement hindurchführbar ist,
wobei weiterhin das Fluid-Anschlusselement einen Durchströmungskanal (51) sowie eine Andruckfläche (53) aufweist, wobei die Andruckfläche derart bemessen ist, dass zumindest ihre maximale gesamthafte Querschnittserstreckung grösser als wenigstens eine Querschnittserstreckung der Durchgangsöffnung ist,
und wobei die wenigstens eine Durchgangsöffnung derart ausgeführt und angeordnet ist, dass ein Befestigungsmittel an wenigstens zwei unterschiedlichen Positionen auf dem Grundelement durch das Grundelement hindurchführbar ist.

## Beschreibung

### TECHNISCHES GEBIET

Die vorliegende Beschreibung betrifft eine Montagevorrichtung für ein Armaturenpaneel gemäss dem Anspruch 1. Sie betrifft weiterhin eine Armatureneinheit umfassend eine Montagevorrichtung der genannten Art, ein Grundelement für eine Montagevorrichtung, ein Fluid-Anschlusselement, sowie ein Verfahren zur Montage einer Armatureneinheit.

### TECHNOLOGISCHER HINTERGRUND

Festverbaute Armatureneinheiten für den Anschluss von Fluiden wie Gasen oder Flüssigkeiten bieten den Vorteil einer grossen Robustheit. Gerade im industriellen oder öffentlichen und halböffentlichen Bereich kommen diese Vorteile zum Tragen. So können Armaturen, beispielsweise im Sanitärbereich, ohne von aussen zugängliche bewegliche oder manipulierbare Teile angeordnet werden.

Es ist wünschenswert, die Montage derartiger Armatureneinheiten zu vereinfachen. Beispielsweise entsteht beim Bohren von Dübellöchern viel Schmutz, es muss sorgfältig und präzise gearbeitet werden, und bestehende Strukturen, wie Fliesen, werden irreversibel beschädigt. US 2005/0044623 schlägt eine Montagevorrichtung für ein Duschpaneel vor, bei dem die Wandaufhängung einerseits an den vorhandenen Leitungsanschlüssen in der Wand erfolgt, und andererseits ein Saugnapf zur weiteren Abstützung und Fixierung Verwendung findet. Somit kann mittels der dort vorgeschlagenen Vorrichtung ein Duschpaneel ohne Bohrungen an einer Wand befestigt werden. Auch die CN 103343557 gibt eine Armatureneinheit an, bei der ein Armaturenpaneel an den vorhandenen Leitungsanschlüssen in der Wand befestigt wird.

Ein Nachteil ist allerdings darin zu sehen, dass, wenn die Armatureneinheiten beispielsweise an vorbestehende Leitungsanschlüsse in einer Wand angeschlossen werden, die Höhe einer Armatur fest vorgegeben ist. So kann es sein, dass beispielsweise ein Duschkopf höher oder tiefer als gewünscht zu liegen kommt. Dies geht mit Einbussen beim Komfort und der Wirtschaftlichkeit einher. Analoges gilt natürlich auch für Armaturenpaneele mit Wasserhähnen, Mischbatterien, Waschbecken, und dergleichen.

Ähnliches kann gesagt werden, wenn beispielsweise Gasanschlüsse ausgehend von vorhandenen Leitungsanschlüssen in einer Wand an einer ergonomisch und/oder betriebstechnisch günstigen Position angeordnet werden sollen.

Die aus dem Stand der Technik bekannten Armatureneinheiten, welche über die vorhandenen Leitungsanschlüsse an einer Wand befestigt werden, zeigen also den Nachteil einer geringen Flexibilität hinsichtlich der Anordnung der Armaturen bei einer vorgegebenen Lage der Leitungsanschlüsse in der Wand. Damit müssen also, um von deren Vorteilen profitieren zu können, die genannten Nachteile akzeptiert oder aber für jede Anwendung ein eigenes Armaturenpaneel gebaut werden.

### DARSTELLUNG DES GEGENSTANDES DER VORLIEGENDEN BESCHREIBUNG

Vorliegend wird eine Montagevorrichtung für ein Armaturenpaneel beschrieben, welche in dieser Hinsicht Vorteile bietet. Die Montagevorrichtung ist derart ausgeführt, dass sie einerseits ohne zusätzliches Bohren in der Wand dort befestigt werden kann, also vorhandene Leitungsanschlüsse als Befestigungspunkte nutzt, andererseits aber die gewünschte Flexibilität hinsichtlich der Anordnung der Armaturen gewährleistet. Gemäss einem weiteren Aspekt ist ein Armaturenpaneel oder eine Armatureneinheit mittels der beschriebenen Montagevorrichtung besonders einfach und schnell, somit kostengünstig, zu montieren. Weiterhin ist ein Fluid-Anschlusselement beschrieben, welches gleichzeitig der Befestigung der Montagevorrichtung an der Wand oder einer anderen Fläche dient, derart, dass die Befestigung unmittelbar an einem in der Wand bestehenden Leitungsanschluss erfolgen kann. Das beschriebene Fluid-Anschlusselement ist besonders einfach zu handhaben. Es bietet zudem den Vorteil, den Anschluss für die Armaturen entsprechend den Erfordernissen flexibel zu positionieren.

Weiterhin ist ein Verfahren zur Montage einer Armatureneinheit unter Verwendung der beschriebenen Montagevorrichtung beschrieben.

Weitere Wirkungen und Vorteile der hier beschriebenen Gegenstände, ob explizit angegeben oder nicht, ergeben sich im Lichte der vorliegenden Beschreibung.

Dies wird mittels der im Anspruch 1 angegebenen Montagevorrichtung sowie der in den weiteren unabhängigen Ansprüchen angegebenen Gegenstände und/oder Verfahren erreicht.

Angegeben ist demnach eine Montagevorrichtung für ein Armaturenpaneel, welche Montagevorrichtung ein Grundelement und wenigstens ein Fluid-Anschlusselement umfasst, wobei das Grundelement an einer Vorderseite Mittel zum Befestigen eines Armaturenpaneels sowie an einer Rückseite eine wenigstens im Wesentlichen ebene Anlagefläche umfasst. In dem Grundelement ist wenigstens eine Durchgangsöffnung für ein Befestigungsmittel angeordnet, die sich von der Rückseite des Grundelementes, insbesondere von der Anlagefläche, zur Vorderseite des Grundelementes erstreckt, derart, dass ein Befestigungsmittel an der wenigstens einen Durchgangsöffnung oder Durchführungsöffnung durch das Grundelement hindurchführbar ist. Das Fluid-Anschlusselement weist einen Durchströmungskanal sowie eine Andruckfläche auf, wobei der Durchströmungskanal eine Ebene der Andruckfläche durchdringt und wobei die Andruckfläche derart bemessen ist, dass zumindest ihre maximale gesamthafte Querschnittserstreckung grösser als wenigstens eine Querschnittserstreckung der Durchgangsöffnung ist. Unter der gesamthaften Querschnittserstreckung ist dabei ein Mass "über Alles" zu verstehen. Die gesamthafte Querschnittserstreckung ist demnach ein Mass über die äusseren Ränder der Andruckfläche. Handelt es sich beispielsweise um eine ringförmige Andruckfläche, so ist unter der gesamthaften Querschnittserstreckung eben nicht die Breite des Rings zwischen einem äusseren Radius und einem inneren Radius zu verstehen, sondern der äussere Durchmesser. Wenigstens die kleinste Querschnittserstreckung der wenigstens einen Durchgangsöffnung ist demnach kleiner als die genannte Querschnittserstreckung der Andruckfläche. Die wenigstens eine Durchgangsöffnung ist derart ausgeführt und angeordnet, dass ein Befestigungsmittel an wenigstens zwei unterschiedlichen Positionen auf dem Grundelement durch das Grundelement hindurchführbar ist. Es werden diese Positionen, an denen ein Befestigungsmittel durch das Grundelement hindurchführbar ist, im Weiteren auch als Befestigungspositionen bezeichnet. Zweckmässig ist die wenigstens eine Durchgangsöffnung derart ausgeführt und angeordnet, dass wenigstens zwei mögliche Befestigungspositionen existieren, deren Abstand voneinander 100mm oder weniger beträgt. Insbesondere existieren in bestimmten Ausführungsformen des beschriebenen Gegenstandes wenigstens zwei Befestigungspositionen, deren Abstand 150mm oder mehr, 200mm oder mehr, und/oder 250mm oder mehr beträgt.

Die Montagevorrichtung ist weiterhin derart ausgeführt, respektive die wenigstens eine Durchgangsöffnung ist derart ausgeführt und angeordnet, dass die Auswahl möglicher Befestigungspositionen entweder stufenlos oder in möglichst kleinen Schritten erfolgen kann. So kann vorgesehen sein, dass der Abstand zwischen zwei möglichen Befestigungspositionen 100mm oder weniger, insbesondere 80mm oder weniger, und weiter insbesondere 50mm oder weniger beträgt.

Die wenigstens eine Durchgangsöffnung ist weiterhin derart ausgeführt und angeordnet, dass wenigstens drei mögliche Befestigungspositionen möglich sind, und insbesondere wenigstens fünf mögliche Befestigungspositionen vorgesehen sind.

Die Befestigungspositionen sind in bestimmten Ausführungsformen des beschriebenen Gegenstandes stufenlos auswählbar, zum Beispiel durch die Anordnung eines Langlochs, innerhalb dessen die Befestigungsposition gewählt werden kann. In anderen Ausführungsformen des beschriebenen Gegenstandes sind die Befestigungspositionen inkrementell festgelegt, beispielsweise durch die Anordnung diskreter Durchgangsöffnungen. Im Weiteren bestehen Ausführungsformen und Mischformen von beidem, indem zum Beispiel mehrere diskrete Langlöcher angeordnet sind. Dies wird unten sowie in den Ausführungsbeispielen näher beschrieben.

Die Ausgangslage für die Verwendung des vorliegenden Gegenstandes ist insbesondere folgende: Ein Armaturenpaneel soll an einer Fläche, beispielsweise an einer Wand, derart befestigt werden, dass eine Armatur des Armaturenpaneels an einer definierten Position zu liegen kommt. Dabei ist an der Fläche, auf der die Montage erfolgen soll, ein Befestigungspunkt vorgegeben. Die Fläche kann zum Beispiel eine Fläche einer aufrecht stehenden Wand sein und der Befestigungspunkt ein Leitungsanschluss in der Wand. Die angegebene Montagevorrichtung ermöglicht es nun, die Befestigungsposition des Grundelementes der Montagevorrichtung derart flexibel zu wählen, dass, wenn das Armaturenpaneel mittels korrespondierender Befestigungsmittel am Armaturenpaneel und an dem Grundelement mit der Montagevorrichtung verbunden ist, die Armatur an der gewünschten Sollposition zu liegen kommt. Dies hat den Vorteil, bestehende Befestigungspunkte an der Fläche verwenden zu können, ohne neue Befestigungspunkte schaffen zu müssen. Insbesondere erfolgt an der gewünschten Befestigungsposition eine Verschraubung an dem Befestigungspunkt der Fläche, derart, dass das Grundelement beim Festziehen der Verschraubung gegen die Fläche gedrückt und mit dieser reibschlüssig verbunden werden kann.

Mittels der hier beschriebenen Montagevorrichtung sowie dem unten weiter angegebenen Montageverfahren ist es demnach möglich, ein bestimmtes Armaturenpaneel an einer fest vorgegebenen Befestigungsposition an einer Fläche und insbesondere auch bei einer fest vorgegebenen Position eines Leitungsanschlusses an der Fläche derart zu montieren, dass eine gewünschte Position der auf dem Armaturenpaneel angeordneten Armaturen erreicht wird. Die Position der Armaturen kann dabei flexibel gewählt werden, ist aber nach erfolgter Montage fest. Die Armaturen können beispielsweise Gasanschlüsse, Sperrorgane, Wasserhähne, Brauseköpfe und dergleichen sein, wobei diese Aufzählung keineswegs als abschliessend zu verstehen ist. Dabei kann die Montage erfolgen, ohne dass neue Befestigungspunkte in der Fläche, an der das Armaturenpaneel angeordnet werden soll, geschaffen werden müssen. Hierzu findet als Befestigungspunkt insbesondere ein Leitungsanschluss Verwendung, an den eine Armatur des Armaturenpaneels angeschlossen werden soll. Ermöglicht ist dies einerseits dadurch, dass an dem Grundelement die wenigstens eine Durchgangsöffnung derart ausgeführt ist, dass wenigstens zwei Befestigungspositionen zur Verfügung gestellt sind, und andererseits dadurch, dass das Fluid-Anschlusselement mit der Andruckfläche so ausgeführt ist, dass es gleichzeitig, neben dem Herstellen einer Fluidverbindung mit dem Leitungsanschluss, auch an der Befestigung des Grundelementes an der Fläche beteiligt ist.

Die beschriebene Vorrichtung und das unten beschriebene Verfahren ermöglichen es also beispielsweise, bei einer vorgegebenen Position eines Wasseranschlusses an einer Wand eine auf einem Armaturenpaneel angeordnete Armatur auf einer gewünschten Höhe an einer Wand anzuordnen, ohne neue Befestigungspunkte in der Wand schaffen zu müssen. In einem anderen Beispiel ist es ermöglicht, einem Benutzer zugängliche Anschlusspunkte für Gase bei vorgegebenen Wandanschlüssen an gut zugänglichen Stellen anzuordnen. Dies kann beispielsweise bei industriellen Anwendungen, aber beispielsweise auch in Krankenhäusern, von Vorteil sein.

Besonders zweckmässig wird demnach der Befestigungspunkt an einer Stelle gewählt, an der ein Leitungsanschluss an der Fläche angeordnet ist. Der Leitungsanschluss kann dabei innerhalb einer Struktur, auf der die Fläche angeordnet ist, liegen, oder der Leitungsanschluss kann auf der Seite der besagten Fläche aus dieser Struktur herausragen. Der Leitungsanschluss kann ein Anschluss einer Zufuhrleitung für ein gasförmiges oder flüssiges Medium sein, beispielsweise ein Wasseranschluss. Der Leitungsanschluss kann aber ebenso ein Anschluss einer Rückführleitung, beispielsweise einer Abwasserleitung, sein. Die genannte Struktur ist beispielsweise eine Wand. Wenn der Leitungsanschluss innerhalb der Struktur liegt, wird das Grundelement derart an die Fläche angelegt, dass eine Durchgangsöffnung an der gewünschten Position auf dem Grundelement mit der Stelle der Fläche zur Deckung kommt, an der der Leitungsanschluss angeordnet ist. Das Fluid-Anschlusselement weist in diesem Falle einen Stutzen auf, der sich von der Andruckfläche erstreckt, und in dessen Innerem ein Teil des Durchströmungskanals des Fluid-Anschlusselements angeordnet ist. Dabei weist der Stutzen insbesondere ein Aussengewinde auf, welches mit einem Innengewinde korrespondiert, das am Leitungsanschluss zur Verfügung gestellt ist. Die Durchgangsöffnung ist dabei so bemessen, dass der Stutzen durch die Durchgangsöffnung hindurchführbar ist. Auf diese Weise kann das Fluid-Anschlusselement mit dem Stutzen als Befestigungsmittel dienen. Das Fluid-Anschlusselement wird mit dem Leitungsanschluss verschraubt, wodurch die Andruckfläche auf dem Rand der Durchgangsöffnung zu liegen kommt. Bei einem ausreichenden Anzugsmoment der Verschraubung ist das Grundelement an der Fläche fixiert. Im zweiten Fall, wenn also der Leitungsanschluss aus der Fläche herausragt, wird die Durchgangsöffnung an der gewünschten Befestigungsposition über den Leitungsanschluss geschoben, derart, dass der Leitungsanschluss von der Rückseite des Grundelementes sich zur Vorderseite des Grundelementes erstreckt. Das Fluid-Anschlusselement kann in diesem Fall ein Innengewinde aufweisen, welches in dem Durchströmungskanal angeordnet ist, während der Leitungsanschluss in dem genannten Beispiel ein Aussengewinde aufweist. Wiederum kann das Fluid-Anschlusselement mit dem Leitungsanschluss derart verschraubt werden, dass die Andruckfläche des Fluid-Anschlusselements auf dem Rand der Durchgangsöffnung auf der Vorderseite des Grundelementes zu liegen kommt. Durch ein entsprechendes Festziehen der Schraubverbindung wird auf die genannte Art das Grundelement an der Fläche fixiert. Dabei wird jeweils eine Fluidverbindung zwischen dem Leitungsanschluss und dem Durchströmungskanal im Fluid-Anschlusselement hergestellt.

Bei einer entsprechenden Ausführung des Grundelementes der Montagevorrichtung kann diese auch dann Verwendung finden, wenn mehrere, insbesondere zwei, Leitungsanschlüsse vorhanden sind. Dies können zum Beispiel Anschlüsse für Warm- und Kaltwasser sein, aber auch Anschlüsse für unterschiedliche Gase oder Flüssigkeiten.

Entsprechend ist auch ein Verfahren zur Montage einer Armatureneinheit an einer Fläche offenbart. Die Armatureneinheit umfasst eine Montagevorrichtung gemäss der vorliegenden Beschreibung und ein Armaturenpaneel, das Mittel aufweist, über die das Armaturenpaneel an korrespondierenden Mitteln der Grundplatte der Montagevorrichtung befestigbar ist, sowie wenigstens eine Armatur. Das genannte Verfahren umfasst, eine gewünschte Position einer Armatur auszuwählen, die Position eines Leitungsanschlusses an der Fläche zu bestimmen, aus dem Abstand der Positionen die benötigte Befestigungsposition zu bestimmen, die der Leitungsanschluss auf dem Grundelement haben muss, damit die Armatur die gewünschte Position erreicht, das Grundelement mit seiner Rückseite derart an die Fläche anzulegen, dass der Leitungsanschluss an der benötigten Befestigungsposition mit einer Durchgangsöffnung des Grundelementes zur Deckung kommt, und, das Fluid-Anschlusselement von der Vorderseite des Grundelementes her mit dem Leitungsanschluss zu verbinden und insbesondere zu verschrauben.

In einem spezielleren Fall handelt es sich um ein Verfahren zur Montage einer Armatureneinheit an einer aufrechtstehenden Fläche, umfassend eine gewünschte Höhe einer Armatur auszuwählen, die Höhe eines Leitungsanschlusses an der aufrechtstehenden Fläche zu bestimmen, aus der Höhendifferenz die benötigte Position zu bestimmen, die der Leitungsanschluss an dem Grundelement haben muss, damit die Armatur die gewünschte Höhe erreicht, das Grundelement mit seiner Rückseite derart an die aufrechtstehende Fläche anzulegen, dass der Leitungsanschluss an der benötigten Position mit einer Durchgangsöffnung des Grundelementes zur Deckung kommt, und, das Fluid-Anschlusselement von der Vorderseite des Grundelementes her mit dem Leitungsanschluss zu verbinden und insbesondere zu verschrauben.

Durch entsprechendes Festziehen der Schraubverbindung kann bei jedem der genannten Montageverfahren das Grundelement reibschlüssig mit der Fläche, an der die Armatureneinheit befestigt wird, verbunden werden.

Selbstverständlich können auch mehrere, insbesondere zwei, Leitungsanschüsse vorhanden sein, die jeweils mit einem Fluid-Anschlusselement auf die genannte Weise verbunden werden.

Das Verfahren kann weiterhin umfassen, einen Fluidanschluss der Armatur mit einem an einem Fluid-Anschlusselement zur Verfügung gestellten Fluidanschluss zu verbinden. Dabei können insbesondere flexible Verbindungselemente, beispielsweise Schläuche, Verwendung finden. Im Weiteren kann das Verfahren umfassen, insbesondere nachdem die notwendigen Fluidverbindungen hergestellt sind, das Armaturenpaneel durch die Verbindung korrespondierender Befestigungsmittel auf dem Grundelement der Montagevorrichtung und dem Armaturenpaneel miteinander zu verbinden.

Das Grundelement weist insbesondere eine Längenerstreckung und eine Breitenerstreckung auf, wobei die Längenerstreckung grösser ist als die Breitenerstreckung. Gemäss einem weiteren Aspekt der vorliegenden Offenbarung ist die wenigstens eine Durchgangsöffnung derart angeordnet, dass die unterschiedlichen Befestigungspositionen in Richtung der Längenerstreckung des Grundelementes angeordnet sind.

Gemäss einem weiteren Aspekt der vorliegenden Beschreibung umfasst die wenigstens eine Durchgangsöffnung wenigstens ein Langloch, oder ist ein Langloch. Es erschliesst sich dem Fachmann von selbst, dass innerhalb des Langlochs die Befestigungspositionen kontinuierlich und stufenlos gewählt werden können. Dabei ist das Langloch in beispielhaften Ausführungsformen derart angeordnet, dass die Längsachse des Langloches oder der Langlöcher in Richtung einer Längserstreckung des Grundelementes verläuft. Gemäss einem weiteren Aspekt der vorliegenden Beschreibung ist ein einziges Langloch angeordnet, welches den gesamten Verstellbereich abdeckt, innerhalb dessen die Befestigungspositionen gewählt werden können, und wobei die Längenerstreckung des Langlochs wenigstens so gross ist wie der angestrebte Verstellbereich, zuzüglich dem Durchmesser eines durch das Langloch zu führenden Befestigungselementes. Somit können im gesamten möglichen Verstellbereich die Befestigungspositionen stufenlos und kontinuierlich gewählt werden. In einer anderen Ausführungsform sind mehrere Langlöcher entlang ihrer parallelen bzw. identischen Längsachsen aufeinanderfolgend angeordnet. Dadurch kann eine Befestigungsposition auf dem Grundelement bereichsweise kontinuierlich und stufenlos gewählt werden.

Gemäss einer weiteren beispielhaften Ausführungsform der Montagevorrichtung sind wenigstens zwei Langlöcher angeordnet, deren Längsachsen parallel zueinander angeordnet sind. Wenn diese in Richtung ihrer Querachse zueinander versetzt angeordnet sind, so ermöglicht dies die Anordnung des Grundelement auch in dem Falle, in dem mehrere Leitungsanschlüsse an der Fläche vorhanden sind, an der das Grundelement befestigt werden soll.

Gemäss einem weiteren Aspekt kann die Montagevorrichtung wenigstens zwei einzelne Durchgangsöffnungen aufweisen, die in einer Reihe angeordnet sind. Insbesondere sind die Durchgangsöffnungen entlang einer Geraden angeordnet. Der Abstand zwischen benachbarten Durchgangsöffnungen, gemessen zwischen den sich gegenüberliegenden Rändern zweier benachbarter Öffnungen, beträgt dabei weniger als das Fünffache des Querschnittsmasses einer Durchgangsöffnung, gemessen senkrecht zur Orientierung besagter Reihe bzw. zu der Geraden. In spezifischeren Ausführungsformen beträgt der genannte Abstand weniger als das Dreifache, weniger als das Doppelte, weniger als das Einfache, weniger als die Hälfte oder weniger als ein Drittel des besagten Querschnittsmasses, und weiter insbesondere ein Viertel oder weniger des besagten Querschnittsmasses. In weiteren beispielhaften Ausführungsformen überlappen sich benachbarte Durchgangsöffnungen. Die Anordnung einzelner Durchführungsöffnungen birgt einerseits den Nachteil, dass die Wahl der Befestigungsposition nicht oder nicht durchgängig stufenlos erfolgen kann. Dabei werden die Abstände, in denen die Befestigungsposition gewählt werden kann, unter anderem von den oben genannten Abständen der Durchgangsöffnungen bestimmt. Es kann daher von Vorteil sein, diese Abstände so klein wie möglich zu wählen, um eine höhere Flexibilität bei der Anordnung des Grundelementes zu ermöglichen. Andererseits bietet die Anordnung einzelner Durchführungsöffnungen einen Vorteil bei der Montage des Grundelementes, insbesondere an einer aufrechtstehenden Fläche. In diesem Falle nämlich ist die Befestigungsposition bereits dann gesichert, wenn ein Befestigungsmittel durch die Durchführungsöffnung durchgeführt und an der Fläche verankert ist, ohne dass vorgängig ein Reibschluss zwischen dem Grundelement und der aufrechtstehenden Fläche hergestellt werden muss. Ein Monteur kann also zunächst auf die genannte Weise das Grundelement an der entsprechenden Befestigungsposition an der aufrechtstehenden Fläche aufhängen, und hat danach beide Hände frei, um beispielsweise ein Werkzeug zu holen, mit dem er beispielsweise eine Schraubenverbindung festziehen kann. Es kann sich in dieser Hinsicht als zweckmässig erweisen, wenn die Durchgangsöffnungen wenigstens näherungsweise kreisrunde Öffnungen sind, welche das Befestigungsmittel mit geringem Spiel aufnehmen. So können zum Beispiel einzelne Öffnungen mit einem Durchmesser im Bereich von 23 bis 25 Millimetern angeordnet sein. Andere Durchmesser sind im Rahmen der vorliegenden Offenbarung selbstverständlich ebenfalls möglich. Zweckmässig können diese so gewählt werden, dass Befestigungselemente wie beispielsweise Leitungsanschlüsse bzw. ein Stutzen des Fluid-Anschlusselementes mit einem bestimmten Aussendurchmesser zwar behinderungsfrei, aber mit nur einem geringen Spiel durchführen zu können.

Insofern ist auch eine Montagevorrichtung der genannten Art offenbart, bei der die Durchgangsöffnungen Öffnungen mit wenigstens näherungsweise kreisrundem Querschnitt umfassen oder sind.

Die Orientierung der Reihe bzw. der Geraden gibt dabei die Richtung vor, entlang derer die unterschiedlichen Befestigungspositionen gewählt werden können.

Dabei erstreckt sich gemäss einem noch spezifischeren Aspekt der Montagevorrichtung die Reihe bzw. die Gerade entlang einer Quererstreckung oder einer Längserstreckung des Grundelementes.

In weiteren Ausführungsformen sind wenigstens zwei parallele Reihen von Öffnungen angeordnet. Dabei sind insbesondere die Teilungsabstände der Öffnungen in beiden Reihen identisch. Dies ermöglicht es, die Montagevorrichtung auch dort flexibel einzusetzen, wo mehr als zwei Leitungsanschlüsse vorhanden sind und genutzt werden sollen. Es kann sich dabei als zweckmässig erweisen, wenn die Durchgangsöffnungen in einer dieser Reihen so bemessen sind, dass ein Befestigungselement in jeder Richtung mit nur geringem Spiel aufgenommen wird, wie dies oben erläutert wurde, während die Durchgangsöffnungen in der oder den anderen Reihen derart ausgeführt sind, dass generell ein grösseres Spiel ermöglicht wird. Damit können Toleranzen in der Anordnung der Leitungsanschlüsse relativ zueinander ausgeglichen werden.

Die Montagevorrichtung kann weiterhin eine Anschlussbüchse umfassen. Die genannte Anschlussbüchse weist ein erstes Gewinde auf, das geeignet und vorgesehen ist, mit einem Leitungsanschluss, beispielsweise einem bauseitig vorgegebenen Wandanschluss, verschraubt zu werden. Die genannte Anschlussbüchse weist weiterhin ein zweites Gewinde auf, welches mit einem Gewinde des Fluid-Anschlusselementes korrespondiert, derart, dass mittels des zweiten Gewindes das Fluid-Anschlusselement mit der Anschlussbüchse verschraubt werden kann. An der Anschlussbüchse und/oder am Fluid-Anschlusselement kann dabei insbesondere eine Nut vorgesehen sein, die derart vorgesehen und angeordnet ist, um einen O-Ring zur Abdichtung zwischen der Anschlussbüchse und dem Fluid-Anschlusselement aufzunehmen. Die genannten Gewinde können als Innen- und/oder Aussengewinde angeordnet sein. Insbesondere kann eines der Gewinde als Innengewinde und das andere der genannten Gewinde als Aussengewinde ausgestaltet sein. In einer beispielhaften Ausführungsform weist die Anschlussbüchse ein Aussengewinde auf, das vorgesehen ist, um in ein Innengewinde des Wandanschlusses eingeschraubt zu werden, sowie ein Innengewinde, welches mit einem Aussengewinde des Fluid-Anschlusselementes korrespondiert.

Das oben beschriebene Verfahren zur Montage einer Armatureneinheit umfasst in diesem Falle weiterhin, die Anschlussbüchse mit dem Leitungsanschluss zu verschrauben. Dabei kann die Gewindeverbindung zwischen dem Leitungsanschluss und der Anschlussbüchse mittels eines geeigneten Abdichtungsmaterials, zum Beispiel mit Hanf, abgedichtet werden. Das Fluid-Anschlusselement wird mit dem zweiten Gewinde der Anschlussbüchse verschraubt. Insofern wird das Fluid-Anschlusselement von der Vorderseite des Grundelementes her mittelbar, über die Anschlussbüchse, mit dem Leitungsanschluss verbunden bzw. verschraubt.

Weiterhin ist eine beispielhafte Montagevorrichtung beschrieben, bei der wenigstens eine Reihe von Langlöchern angeordnet ist, deren Längsachsen wenigstens näherungsweise senkrecht oder parallel zu der Orientierung der Reihe verlaufen.

Es ist weiterhin eine Armatureneinheit angegeben, umfassend eine Montagevorrichtung der beschriebenen Art und ein Armaturenpaneel. Dabei weist das Armaturenpaneel Mittel auf, mittels derer das Armaturenpaneel an korrespondierenden Mitteln der Grundplatte der Montagevorrichtung befestigbar ist, und umfasst weiterhin wenigstens eine Armatur mit einem Fluidanschluss. Die Armatureneinheit umfasst des Weiteren flexible Leitungen zur Verbindung des Fluidanschlusses der Armatur mit einem an einem Fluid-Anschlusselement bereitgestellten Fluidanschluss. Die flexiblen Leitungen ermöglichen es, diese Verbindung auch dann herzustellen, wenn die relative Lage einer Armatur und eines Fluid-Anschlusselementes nicht vorab bekannt sind, wie es bei der Anwendung der hier beschriebenen Gegenstände der Fall ist. Da das Fluid-Anschlusselement gleichzeitig der Befestigung des Grundelementes an einer Fläche dient, kommt es jeweils an dem flexibel gewählten Befestigungspunkt zum Liegen, wodurch der Abstand zwischen dem Fluid-Anschlusselement und dem Fluidanschluss der Armatur variabel ist. Dies ist durch die flexiblen Leitungen ermöglicht. Dabei können Enden der flexiblen Leitungen und die Anschlusspunkte am Fluid-Anschlusselement und/oder an der Armatur mit Schnellverschlüssen ausgestattet sein.

Weiterhin ist ein Grundelement für eine Montagevorrichtung beschrieben welches die ein Grundelement betreffenden oben beschriebenen Merkmale aufweist.

Im Weiteren ist eine Ausführungsform eines Fluid-Anschlusselementes näher beschrieben, welches gleichzeitig zur Befestigung des Grundelementes an einer Fläche dient. Das Fluid-Anschlusselement weist eine erste und eine zweite Stirnseite auf, zwischen denen eine axiale Erstreckung definiert ist. Ausgehend von der ersten Stirnseite ist ein in Richtung der axialen Erstreckung verlaufender erster Kanal innerhalb des Fluid-Anschlusselementes angeordnet. Das Fluid-Anschlusselement weist weiterhin an einer Aussenseite eine quer zur axialen Erstreckung verlaufende Nut auf, welche von zwei axialen Begrenzungswänden begrenzt ist. Die Nut erstreckt sich in ihrer Länge insbesondere wenigstens über einen Teil des Umfangs des Fluid-Anschlusselements, und kann insbesondere als vollständig umlaufende Nut ausgebildet sein. Dabei kann der Querschnitt, um den sich der genannte Umfang erstreckt, kreisrund sein, aber prinzipiell auch andere, zum Beispiel polygonale, Formen aufweisen. In bestimmten Ausführungsformen weist das Fluid-Anschlusselement zwei zylindrische Kränze auf, auf denen die axialen Begrenzungswände angeordnet sind und zwischen denen die Nut angeordnet ist. Ausgehend von der Nut erstreckt sich ein zweiter Kanal in das Fluid-Anschlusselement. Der zweite Kanal steht innerhalb des Fluid-Anschlusselementes mit dem ersten Kanal in Fluidverbindung, derart, dass der erste Kanal und der zweite Kanal zusammen einen Durchströmungskanal ausbilden, der die erste Stirnfläche mit der Nut verbindet. Weiterhin kann vorgesehen sein, dass das Fluid-Anschlusselement ein ringförmiges Element umfasst, welches die zylindrischen Kränze umgebend angeordnet ist, und welches an seiner Mantelfläche eine Anschlussöffnung zwischen einer radial inneren Fläche und einer radial äusseren Fläche des ringförmigen Elementes aufweist. Es ist eine fluiddichte Anordnung zwischen den zylindrischen Kränzen und dem ringförmigen Element hergestellt, derart, dass die Nut des Fluid-Anschlusselementes eine Fluidverbindung zwischen dem Durchströmungskanal des Fluid-Anschlusselementes und der Anschlussöffnung des ringförmigen Elementes herstellt. Auf diese Art ist eine Fluidkommunikation zwischen der ersten Stirnfläche und der Anschlussöffnung des ringförmigen Elementes ermöglicht. Wird nun das Fluid-Anschlusselement mit einem Leitungsanschluss verbunden, ist ebenfalls eine Verbindung zwischen dem Leitungsanschluss und der Anschlussöffnung des ringförmigen Elementes hergestellt. An der Anschlussöffnung des ringförmigen Elementes sind insbesondere Mittel vorgesehen, welche den Anschluss weiterer Leitungen ermöglichen. So kann beispielsweise ein Innengewinde vorgesehen sein, an welchem eine Leitung unmittelbar angeschlossen werden kann, oder in das ein Anschlusselement, beispielsweise eine Tülle oder eine Schnellkupplung, eingeschraubt sein kann. Weiterhin kann insbesondere auch vorgesehen sein, dass das ringförmige Element in seiner Umfangsrichtung drehbar auf den Kränzen angeordnet ist. Somit kann die Umfangsposition des an dem ringförmigen Element zur Verfügung gestellten Anschlusses variiert werden. In einer weiteren Ausführungsform ist das ringförmige Element mit einer weiteren Gewindebohrung versehen, durch das eine Schraube oder ein Gewindestift geschraubt werden kann, welche innerhalb der Nut eine axiale Sicherung des ringförmigen Elementes bewirkt und dieses gegebenenfalls auch in Umfangsrichtung festsetzt.

In einer Weiterbildung des beschriebenen Fluid-Anschlusselementes ist im Bereich der ersten Stirnseite ein Gewinde angeordnet, welches sich mit seiner Gewindeachse in Richtung der axialen Erstreckung des Fluid-Anschlusselementes erstreckt. Das Gewinde dient insbesondere der Verschraubung des Fluid-Anschlusselementes mit einem Leitungsanschluss. Wie oben beschrieben, erfolgt diese Verschraubung von der Vorderseite eines Grundelementes einer Montagevorrichtung der beschriebenen Art, derart, dass die Andruckfläche des Fluid-Anschlusselementes auf der Vorderseite des Grundelementes zu liegen kommt, wodurch beim weiteren Festziehen der Verschraubung das Grundelement auf eine Fläche gedrückt wird, an der der Leitungsanschluss zur Verfügung gestellt ist.

Eine weitere beispielhafte Ausführungsform des Fluid-Anschlusselementes zeichnet sich dadurch aus, dass ausgehend von der ersten Stirnseite ein den ersten Kanal umgebender Stutzen ausgebildet ist, auf dessen Aussenfläche das genannte Gewinde angeordnet ist, wobei weiterhin an einem axialen Ende des Stutzens eine radiale Stufe mit einer Stirnfläche ausgebildet ist. Insbesondere ist die radiale Stufe ein Übergang zu einem grösseren Querschnitt als demjenigen des Stutzens. Die besagte Stirnfläche bildet die Andruckfläche. Insbesondere ist der erste Kanal zentrisch in dem Stutzen angeordnet. Alternativ dazu ist ein Gewinde in dem ersten Kanal ausgebildet, und an der den ersten Kanal umgebenden Stirnfläche ist die Andruckfläche ausgebildet.

Die oben dargestellten Ausgestaltungen der beschriebenen Gegenstände können selbstverständlich untereinander kombiniert werden. Weitere, nicht spezifisch offenbarte Ausführungsformen der Lehre dieses Dokumentes erschliessen sich dem Fachmann ohne weiteres.

### KURZE BESCHREIBUNG DER FIGUREN

Die hier dargelegten Sachverhalte werden nachfolgend anhand ausgewählter in der Zeichnung dargestellter Ausführungsbeispiele näher erläutert. Im Einzelnen zeigen
- Fig. 1: eine beispielhafte Ausführungsform einer Sanitär-Armatureneinheit unter Verwendung einer vorliegend beschriebenen Montagevorrichtung;
- Fig. 2: eine Vorderansicht einer beispielhaften Ausführungsform eines Grundelementes einer vorliegend beschriebenen Montagevorrichtung;
- Fig. 3: weitere beispielhafte Ausführungsformen eines Grundelementes einer vorliegend beschriebenen Montagevorrichtung;
- Fig. 4: ein beispielhaftes Fluid-Anschlusselement;
- Fig. 5: eine Schnittdarstellung des Fluid-Anschlusselementes der Figur 4;
- Fig. 6: ein Beispiel für die Befestigung eines Grundelements an einer Wand, wobei eine Anschlussbüchse Verwendung findet.

Nicht für das Verständnis der beschriebenen Gegenstände notwendige Einzelheiten sind weggelassen worden. Weiterhin zeigen die Zeichnungen nur ausgewählte Ausführungsbeispiele und dürfen nicht zur Einschränkung der in den Ansprüchen umschriebenen Gegenstände herangezogen werden. Nicht gezeigte Gegenstände können durchaus von den Ansprüchen abgedeckt sein.

### AUSFÜHRUNGSBEISPIELE

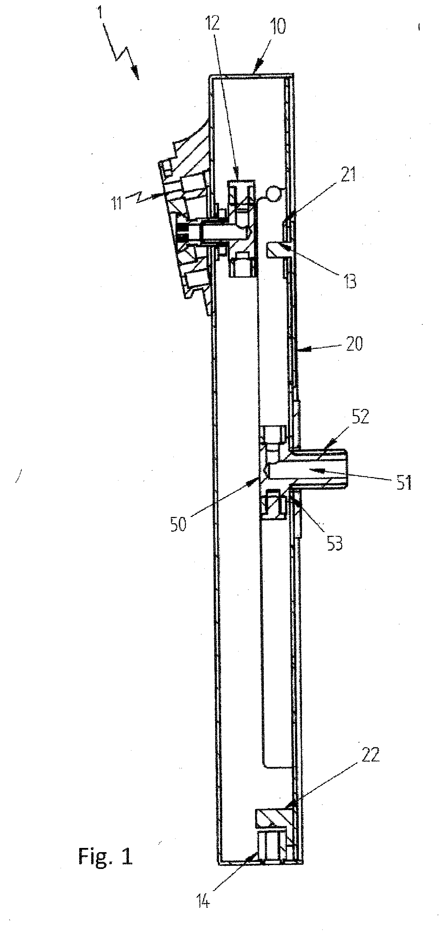

Figur 1 zeigt eine Armatureneinheit 1, welche ein Armaturenpaneel 10 sowie eine Montagevorrichtung umfasst, wobei die Montagevorrichtung ein Grundelement 20 und ein Fluid-Anschlusselement 50 umfasst. Das Grundelement 20 weist eine Vorderseite auf, welche zum Armaturenpaneel hinweist, sowie eine gegenüberliegende Rückseite. Diese Rückseite weist eine ebene Anlagefläche auf, mit der das Grundelement an einer nicht dargestellten Wand oder einer anderen Fläche angeordnet werden kann. An dem Armaturenpaneel 10 ist auf an sich bekannte Weise eine Armatur angeordnet, im dargestellten Beispiel eine Aufnahmevorrichtung 11 für einen Brausekopf. Weiterhin ist ein Armaturenanschluss 12 angeordnet, über den Wasser zu dem Brausekopf geführt werden kann. Aus Gründen der Übersichtlichkeit nicht dargestellt, für den Fachmann jedoch ohne weiteres nachvollziehbar, besteht eine Verbindung zwischen dem Armaturenanschluss 12 und dem Fluid-Anschlusselement 50. Diese kann auf ebenfalls an sich bekannte Weise durch flexible und insbesondere druckfeste Schläuche hergestellt sein. Das Fluid-Anschlusselement 50 der Montagevorrichtung umfasst einen hohlgebohrten Stutzen 52, in dem ein Kanal 51 angeordnet ist. Die Bohrung in dem Stutzen steht mit einer radialen Bohrung in Verbindung, die in einer Nut mündet, welche als Fluidverteiler in dem Fluid-Anschlusselement wirkt. Das Fluid-Anschlusselement 50 wird unten weiter im Detail ausgeführt. Auf dem Stutzen 52 ist ein Aussengewinde angeordnet. Mittels dieses Aussengewindes kann das Fluid-Anschlusselement 50 in einen nicht dargestellten Leitungsanschluss eingeschraubt werden. Damit kann ein Fluid, zum Beispiel im dargestellten Beispiel eines Duschpaneels Wasser, aus dem Leitungsanschluss in das Fluid-Anschlusselement 50 einströmen und von dort, wie oben bereits beschrieben, zum Armaturenanschluss 12 geführt werden. Durch das Einschrauben des Fluid-Anschlusselementes 50 bzw. des Stutzens 52 in einem Leitungsanschluss, der beispielsweise in einer Wand angeordnet ist, kommt eine Andruckfläche 53 des Fluid-Anschlusselementes auf der Vorderseite des Grundelementes 20 zur Anlage. Bei weiterem Festziehen der Schraubverbindung zwischen dem Fluid-Anschlusselement 50 und dem Leitungsanschluss wird eine Kraft auf das Grundelement ausgeübt, welche das Grundelement gegen die nicht dargestellte Wand drückt und dort reibschlüssig fixiert. Auch wenn die Wand und der Leitungsanschluss aus Gründen der Übersichtlichkeit nicht dargestellt sind, erschliesst sich dies dem Fachmann ohne weiteres. Zwischen der Wand und dem Grundelement kann an einer anderen Stelle des Grundelementes weiterhin eine Vorrichtung angeordnet sein, welche durch Adhäsion an der Wand befestigt ist, und somit ein Verdrehen der Armatureneinheit um den durch das Fluid-Anschlusselement zur Verfügung gestellten Befestigungspunkt verhindert. Die genannte Adhäsionsverbindung kann beispielsweise durch einen Saugnapf oder durch Kleben hergestellt sein. Wie ersichtlich ist, kann das Grundelement auf diese Weise sehr einfach und ohne Dübellöcher zu bohren an einer Wand befestigt werden. Das Armaturenpaneel 10 ist auf ebenfalls an sich bekannte Weise über geeignete Mittel 13 und 14 und korrespondierende Mittel 21 und 22 mit dem Grundelement verbunden. Auf diese Weise ist das Armaturenpaneel an der Wand fixiert.

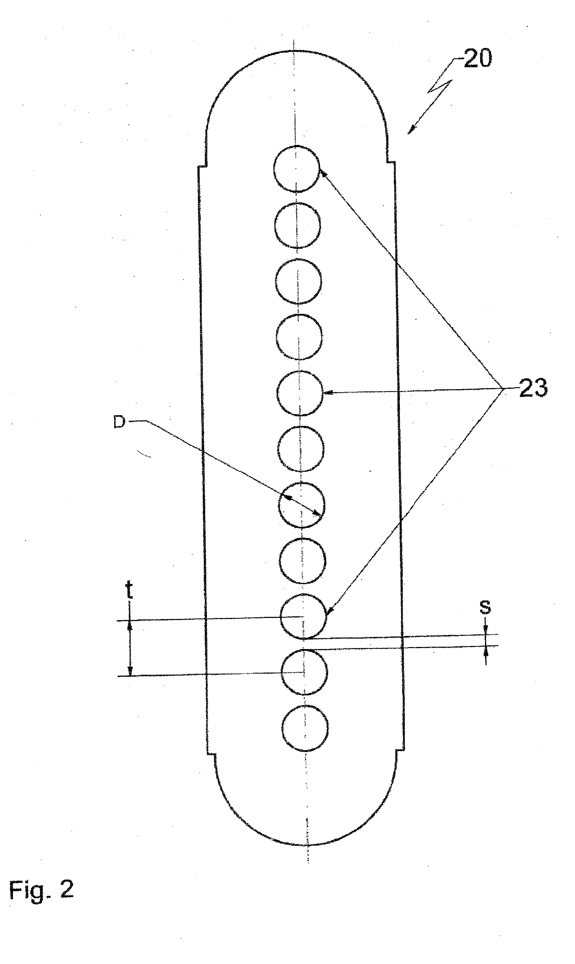

Die Ansicht einer Vorderseite des Grundelementes 20 in der Figur 2 offenbart eine Anordnung mehrerer Durchgangsöffnungen 23 in einer Reihe oder entlang einer Geraden, wobei die Orientierung der Reihe bzw. die Gerade in der Richtung der Längserstreckung des Grundelementes verläuft. Die Durchgangsöffnungen 23 sind mit einem Raster- oder Teilungsmass t angeordnet. Dieses Teilungsmass ist für alle Durchgangsöffnungen konstant, was nicht zwingend, aber zweckmässig ist. Durch diese Durchgangsöffnungen ist, wie in der Figur 1 dargestellt, ein Befestigungselement, also zum Beispiel ein Stutzen eines Fluid-Anschlusselementes, hindurchführbar, um das Grundelement, wie in Verbindung mit der Figur 1 beschrieben, an einer Wand oder einer anderen Fläche zu befestigen. Dabei bietet jede der Durchgangsöffnungen 23 eine diskrete Befestigungsposition. Die Inkremente der Befestigungspositionen werden durch das Teilungsmass t bzw., bei vorgegebenen Durchmesser D der dargestellten Durchgangsöffnungen, durch den Abstand s einander gegenüberliegender Ränder der Durchgangsöffnungen bestimmt. Dieser Abstand s ist deutlich kleiner gewählt als der Durchmesser D. Der Durchmesser D wird beispielsweise in einem Bereich von 23 bis 25 Millimetern gewählt. Das Teilungsmass kann beispielsweise 30 mm betragen, woraus ein Abstand s von etwa 6 mm resultiert. Der Abstand s beträgt in diesem Falle rund ein Viertel des Durchmessers der Durchgangsöffnungen. Diese Massangaben sind selbstverständlich nicht einschränkend zu verstehen; die jeweiligen Masse, insbesondere die Querschnittsabmessungen der Durchgangsöffnungen, können im Einzelfall zweckmässig und abhängig zum Beispiel vom Aussendurchmesser des durchzuführenden Elementes gewählt werden.

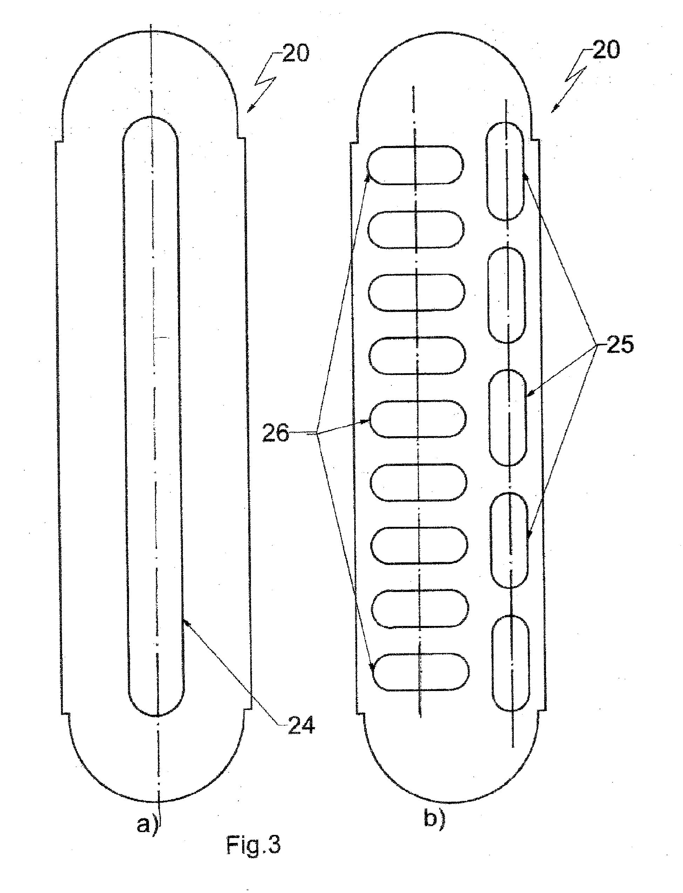

In der Figur 3 sind weitere beispielhafte Ausführungsformen der Anordnung von wenigstens einer Durchgangsöffnunge an einem Grundelement einer Montagevorrichtung der beschriebenen Art dargestellt, die es jeweils ermöglichen, ein Befestigungsmittel an unterschiedlichen Positionen auf dem Grundelement durch das Grundelement hindurchzuführen. Figur 3a) zeigt eine Ausführungsform, bei der ein einziges Langloch 24 mit einer Längsachse, welche zumindest im Wesentlichen in Richtung der Längserstreckung des Grundelementes 20 verläuft, angeordnet ist und den gesamten Verstellbereich abdeckt. Gegenüber der in Figur 2 dargestellten Ausführungsform hat dies den Vorteil, dass die Befestigungsposition entlang der Längsachse des Langlochs 24 kontinuierlich und stufenlos gewählt werden kann. Auf der anderen Seite ist das Grundelement erst dann an einer Fläche fixiert, wenn das Befestigungselement mit einem mindesten Anzugsmoment festgezogen ist, derart, dass ein ausreichender Reibschluss zwischen dem Grundelement 20 und der Fläche, an der es befestigt werden soll, hergestellt ist. Die Figur 3b) zeigt eine Ausführungsform, welche geeignet ist, um eine Armatureneinheit zu befestigen, welche zwei Leitungsanschlüsse benötigt, zum Beispiel für Warmwasser und Kaltwasser, oder zur Zufuhr unterschiedlicher Gase. Es sind 2 Reihen von Durchgangsöffnungen 25 und 26 angeordnet. Dabei sind in einer Reihe Langlöcher 25 angeordnet, deren Längsachsen entlang der Orientierung der Reihe, bzw. einer Geraden, auf der die Langlöcher 25 angeordnet sind, orientiert sind. In einer zweiten Reihe von Langlöchern 26 sind diese mit ihrer Längsachse quer und insbesondere im Wesentlichen senkrecht zur Orientierung der Reihe angeordnet. Mittels eines der Langlöcher 26 kann das Grundelement an einem ersten Leitungsanschluss befestigt werden, wobei eine laterale Verschieblichkeit des Grundelementes 20 gewährleistet ist, so, dass Toleranzen im lateralen Abstand zweier Leitungsanschlüsse ausgeglichen werden können. Mittels eines korrespondierenden Langlochs 25 kann dann eine Verbindung mit dem zweiten Leitungsanschluss hergestellt werden, wobei die Form und Anordnung der Langlöcher es ermöglicht, auch Toleranzen in der Lage der Leitungsanschlüsse in vertikaler Richtung auszugleichen.

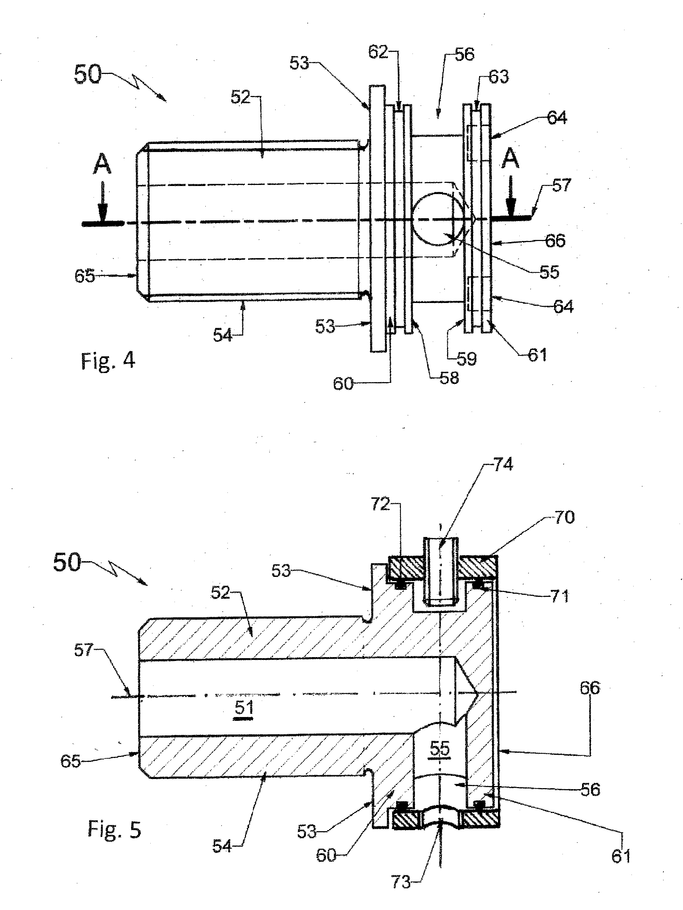

In der Figur 4 ist eine beispielhaft Ausführungsform des Fluid-Anschlusselementes 50 dargestellt. Das Fluid-Anschlusselement 50 weist eine erste Stirnseite 65 und eine zweite Stirnseite 66 auf. Zwischen den Stirnseiten 65 und 66 ist eine axiale Erstreckung des Fluid-Anschlusselementes entlang einer Längsachse 57definiert. An der ersten Stirnseite umfasst das Fluid-Anschlusselement einen Stutzen 52, welcher mit einem Aussengewinde 54 versehen ist. Ausgehend von der ersten Stirnseite 65 erstreckt sich ein in der vorliegenden Darstellung nicht sichtbarer erster Strömungskanal axial durch den Stutzen und innerhalb des Fluid-Anschlusselementes. An einem axialen Ende des Stutzens 52 ist eine radiale Stufe ausgebildet, mit einer Stirnfläche 53, welche die in Verbindung mit Figur 1 erläuterte Andruckfläche bildet. Auf dem Fluid-Anschlusselement ist weiterhin eine umlaufende Nut 56 angeordnet. Am Grund der Nut ist ein zweiter, radial verlaufender, Kanal 55 angeordnet, der mit dem ersten Kanal in Verbindung steht, wie unten in Verbindung mit der Figur 5 näher erläutert wird. Die Nut 56 ist von zwei axialen Begrenzungswänden 58 und 59 begrenzt. Jede Begrenzungswand 58 und 59 ist auf einem zylindrischen Kranz 60 bzw. 61 angeordnet. Auf jedem der Kränze ist eine weitere umlaufende Nut 62 und 63 zur Aufnahme eines Dichtungselements angeordnet. Weiterhin sind Werkzeugansätze 64 an der zweiten Stirnseite 66 angeordnet, welche zum Verschrauben des Aussengewindes 54 mit einem Gegenstück, beispielsweise mit einem Gewinde, das innerhalb einer Anschlussleitung in einer Wand ausgebildet ist, dienen.

In der Figur 5 ist das Fluid Anschlusselement 50 in einem Schnitt entlang A-A in Figur 4 dargestellt, wobei weiterhin ein ringförmiges Element 70 gezeigt ist, welches die Nut 56 überdeckt und abschliesst. Der erste Kanal 51 ist als von der ersten Stirnseite 65 ausgehende axiale Sackbohrung ausgeführt. Ein zweiter Kanal 55 geht vom Grund der Nut 56 aus und schneidet den ersten Kanal 51, derart, dass eine Fluidverbindung zwischen der ersten Stirnseite 65 und der Nut 56 des Fluid-Anschlusselementes 50 hergestellt ist. Das ringförmige Element 70 überdeckt die Nut 56 und umgibt die zylindrischen Kränze 60 und 61. O-Ringe 71 und 72 sind in die in Verbindung mit Figur 4 erläuterten Aufnahmenuten zur Aufnahme eines Dichtelementes eingelegt. Mittels dieser ist eine fluiddichte Anordnung zwischen dem ringförmigen Element und den Kränzen hergestellt. An dem ringförmigen Element ist eine Anschlussöffnung 73 angeordnet, welche von einer radial inneren zu einer radial äusseren Wand des ringförmigen Elementes reicht. Die Öffnung 73 ist als Bohrung mit einem Innengewinde ausgeführt. Das ringförmige Element weist weiterhin eine zweite Gewindebohrung auf, in welcher eine Schraube 74 angeordnet ist. Mittels der Schraube 74, welche in die Nut 56 hineinragt, ist das ringförmige Element 70 in seiner Lage auf den Kragen 60 und 61 axial fixiert, und kann bei Bedarf durch weiteres Eindrehen der Schraube auch in Umfangsrichtung fixiert werden. Aufgrund der fluiddichten Anordnung des ringförmigen Elements auf den Kränzen wird ein Fluid, das beispielsweise von der Stirnseite 65 des Fluid-Anschlusselementes 50 durch den vom ersten Kanal 51 und dem zweiten Kanal 55 gebildeten Durchströmungskanal in die Nut 56 strömt, in der Umfangsnut 56 verteilt und kann durch die Öffnung 73 des ringförmigen Elements 70 ausströmen. Wie nun ohne weiteres nachvollziehbar ist, ist, wenn das Fluid-Anschlusselement bei der Montage der Montagevorrichtung an einer Fläche in einem Gegenstück eingeschraubt und festgezogen ist, die Umfangslage der radialen Bohrung 55 vorgegeben. Hingegen kann das ringförmige Element 70 auf den Kränzen in eine zum Anschluss einer Leitung geeignete und gut zugängliche Position am Umfang des Fluid-Anschlusselements gebracht werden. An das Gewinde der Öffnung 73 kann dabei beispielsweise ein Schlauchende direkt eingeschraubt werden, oder es kann auch ein geeignetes Kupplungselement zum Anschluss einer Leitung eingeschraubt werden. Durch Anziehen der Schraube 74 kann, insbesondere an den vorstehend beschriebenen Schritt anschliessend, bedarfsweise die Umfangslage der ringförmigen Elementes gesichert werden.

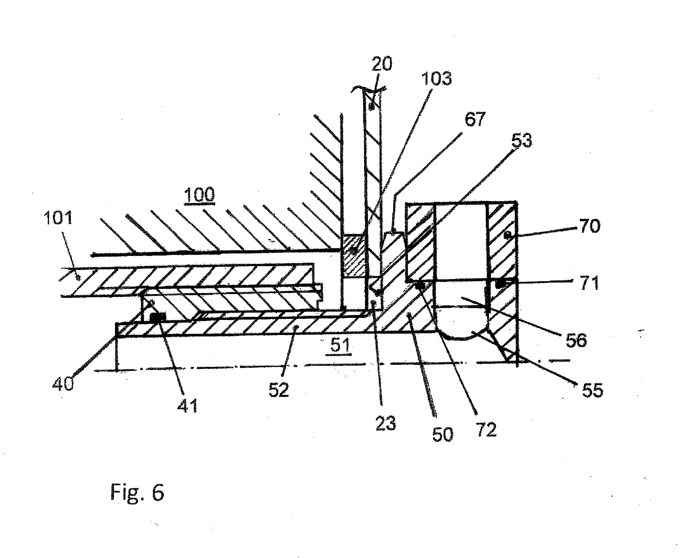

In der Figur 6 ist eine beispielhafte Montage eines Grundelementes 20 an einer Wand 100 gemäss einer Ausführungsform der Wandmontage erläutert, wobei nur eine Hälfte der im Wesentlichen rotationssymmetrischen Anordnung dargestellt ist. In der Wand 100 ist ein Wandanschluss 101 angeordnet, der mit einem offenen Ende zu einer Öffnung der Wand hinweisend angeordnet ist. Der Wandanschluss 101 ist bauseitig fest vorgegeben. Es handelt sich zum Beispiel um einen standardmässigen ½" Wand-Wasseranschluss, wobei dies nicht einschränkend zu verstehen ist. In den Wandanschluss 101 ist eine Anschlussbüchse 40 eingeschraubt. Die Gewindeverbindung zwischen dem Innengewinde des Wandanschlusses 101 und dem korrespondierenden Aussengewinde der Anschlussbüchse 40 kann mittels eines geeigneten Abdichtungsmaterials abgedichtet sein. Als Abdichtungsmaterial findet an dieser Stelle insbesondere Hanf auf die an sich bekannte und bei Sanitärinstallationen übliche Weise Anwendung. Die rohrförmige Anschlussbüchse umfasst an ihrer Innenwand eine Nut, in die ein O-Ring 41 eingelegt ist. Die Anschlussbüchse umfasst weiterhin ein Innengewinde. In das Innengewinde ist ein Fluid-Anschlusselement 50 der oben beschriebenen Art eingeschraubt und dichtet mit der Anschlussbüchse 40 über den O-Ring 41 ab. Das Innengewinde der Anschlussbüchse korrespondiert mit dem Aussengewinde des Fluid-Anschlusselements 50. Das hier dargestellte Fluid-Anschlusselement unterscheidet sich von der in Verbindung mit den Figuren 4 und 5 dargestellten Ausgestaltung darin, dass sich das Aussengewinde nur über einen Teil der axialen Erstreckung des Stutzens 52 erstreckt, während ein weiterer Abschnitt der Aussenfläche des Stutzens glatt ausgeführt und zur Herstellung einer fluiddichten Konfiguration mit dem O-Ring 41 der Anschlussbüchse vorgesehen ist. Es unterscheidet sich weiterhin dadurch, dass ein Aussensechskant 67 als Ansatz für ein Werkzeug zum Einschrauben des Fluid-Anschlusselementes vorgesehen ist. Derart kann ein Fluid aus dem Wandanschluss in den Kanal 51 des Fluid-Anschlusselementes 50 einströmen und von dort über den Kanal 55 in die vom ringförmigen Elements 70 abgeschlossene Fluid-Verteilnut 56 einströmen. Das Fluid-Anschlusselement liegt mit der Andruckfläche 53 auf dem Grundelement auf. Zwischen dem Grundelement 20 und der Wand 100 ist ein Distanzblech 103 angeordnet. Das Distanzblech 103 gewährleistet eine definierte Übertragung der Kraft, mit der das Grundelement 20 vom Fluid-Anschlusselement beim Festschrauben der Anordnung in der Anschlussbüchse durch die Durchgangsöffnung 23 des Grundelementes 20 hindurch angepresst und reibschlüssig an der Wand befestigt wird. Die Anordnung der Anschlussbüchse vermag in bestimmten Fällen die Montage des Grundelementes bzw. des Armaturenpaneels an der Wand 100 zu vereinfachen, und insbesondere die Dichtigkeit der Fluidverbindung zwischen dem Wandanschluss 101 und dem Fluid-Anschlusselement 50 zu gewährleisten. Das Gewinde des Wandanschlusses ist bauseitig vorgegeben, und weist möglicherweise erhebliche Gebrauchsspuren auf. Die Anschlussbüchse 40 weist ein passendes Gewinde auf, wobei Gewindetoleranzen, die durch mögliche Unebenheiten und Beschädigungen des Gewindes des Wandanschlusses verursacht sind, durch die oben genannte Verwendung eines Abdichtmaterials ausgeglichen und abgedichtet werden können. Andererseits kann die Gewindepaarung zwischen der Anschlussbüchse und dem Fluid-Anschlusselement frei und zweckmässig für die angestrebte Verwendung gestaltet werden. Eine Abdichtung zwischen der Anschlussbüchse und dem Fluid-Anschlusselement kann dann durch geeignete Mittel, wie beispielsweise den genannten O-Ring, gewährleistet werden. Ebenso ist die Anschlussbüchse 40 geeignet, um Lagetoleranzen des freien Endes des Wandanschlusses 101 in der Wand 100 auszugleichen.

Obschon der Gegenstand der vorliegenden Beschreibung anhand ausgewählter Ausführungsbeispiele erläutert wurde, sollen diese nicht einer Einschränkung der beanspruchten Erfindung dienen. Die Ansprüche umfassen Ausführungsformen, die nicht explizit dargestellt sind, und Ausführungsformen, die von den gezeigten Beispielen abweichen, sind dennoch von den Ansprüchen gedeckt.

### BEZUGSZEICHENLISTE

- 1: Armatureneinheit
- 10: Armaturenpaneel
- 11: Armatur
- 12: Armaturenanschluss
- 13: Verbindungsmittel
- 14: Verbindungsmittel
- 20: Grundelement
- 21: Verbindungsmittel
- 22: Verbindungsmittel
- 23: Durchgangsöffnung
- 24: Durchgangsöffnung, Langloch
- 25: Durchgangsöffnung, Langloch
- 26: Durchgangsöffnung, Langloch
- 40: Anschlussbüchse
- 41: O-Ring
- 50: Fluid-Anschlusselement, Befestigungselement
- 51: Kanal
- 52: Stutzen
- 53: Andruckfläche
- 54: Aussengewinde
- 55: Kanal
- 56: Nut, Fluid-Verteilnut
- 57: Längsachse, Richtung der axialen Erstreckung
- 58: axiale Begrenzungswand
- 59: axiale Begrenzungswand
- 60: Kranz
- 61: Kranz
- 62: Nut, Dichtungsnut
- 63: Nut, Dichtungsnut
- 64: Werkzeugansatz
- 65: Stirnseite
- 66: Stirnseite
- 67: Aussensechskant
- 70: ringförmiges Element
- 71: O-Ring
- 72: O-Ring
- 73: Anschlussöffnung
- 74: Schraube
- 100: Wand
- 101: bauseitig vorgegebener Wandanschluss, Leitungsanschluss
- 103: Distanzblech

- D: Querschnittsabmessung, Durchmesser
- s: Abstand
- t: Teilungsmass, Rastermass

## Patentansprüche

1. Montagevorrichtung für ein Armaturenpaneel, welche Montagevorrichtung ein Grundelement (20) und wenigstens ein Fluid-Anschlusselement (50) umfasst, wobei
das Grundelement an einer Vorderseite Mittel (21, 22) zum Befestigen eines Armaturenpaneels sowie an einer Rückseite eine wenigstens im Wesentlichen ebene Anlagefläche umfasst,
in dem Grundelement wenigstens eine Durchgangsöffnung (23, 24, 25, 26) für ein Befestigungsmittel angeordnet ist, die sich von der Rückseite des Grundelementes zur Vorderseite des Grundelementes erstreckt, derart, dass ein Befestigungsmittel an der wenigstens einen Durchgangsöffnung durch das Grundelement hindurchführbar ist,
wobei weiterhin das Fluid-Anschlusselement einen Durchströmungskanal (51, 55) sowie eine Andruckfläche (53) aufweist, wobei der Durchströmungskanal eine Ebene der Andruckfläche durchdringt und wobei die Andruckfläche derart bemessen ist, dass zumindest ihre maximale gesamthafte Querschnittserstreckung grösser als wenigstens eine Querschnittserstreckung der Durchgangsöffnung ist,
und wobei die wenigstens eine Durchgangsöffnung derart ausgeführt und angeordnet ist, dass ein Befestigungsmittel an wenigstens zwei unterschiedlichen Positionen auf dem Grundelement durch das Grundelement hindurchführbar ist.

2. Montagevorrichtung gemäss Anspruch 1, wobei die wenigstens eine Durchgangsöffnung ein Langloch (24, 25, 26) umfasst.

3. Montagevorrichtung gemäss dem vorstehenden Anspruch, wobei das Langloch derart angeordnet ist, dass die Längsachse des Langloches in Richtung einer Längserstreckung des Grundelementes verläuft.

4. Montagevorrichtung gemäss einem der beiden vorstehenden Ansprüche, wobei wenigstens zwei Langlöcher angeordnet sind, deren Längsachsen parallel zueinander angeordnet sind.

5. Montagevorrichtung gemäss einem der vorstehenden Ansprüche, wobei wenigstens zwei einzelne Durchgangsöffnungen (23, 25, 26) in einer Reihe angeordnet sind, wobei der Abstand (s) zwischen den Durchgangsöffnungen, gemessen zwischen den sich gegenüberliegenden Rändern zweier benachbarter Öffnungen weniger als das Fünffache des Querschnittsmasses (D) einer Durchgangsöffnung, gemessen senkrecht zur Orientierung besagter Reihe, beträgt.

6. Montagevorrichtung gemäss dem vorstehenden Anspruch, wobei die Reihe sich entlang einer Quererstreckung oder einer Längserstreckung des Grundelementes erstreckt.

7. Montagevorrichtung gemäss einem der beiden vorstehenden Ansprüche, wobei wenigstens zwei parallele Reihen von Öffnungen angeordnet sind.

8. Montagevorrichtung gemäss dem vorstehenden Anspruch, wobei wenigstens eine Reihe von Langlöchern (25, 26) angeordnet ist, deren Längsachsen wenigstens näherungsweise senkrecht oder parallel zu der Orientierung der Reihe verlaufen.

9. Armatureneinheit, umfassend eine Montagevorrichtung gemäss einem der vorstehenden Ansprüche und ein Armaturenpaneel (10), wobei das Armaturenpaneel Mittel (13, 14) aufweist, über die das Armaturenpaneel an korrespondierenden Mitteln (21, 22) der Grundplatte (20) der Montagevorrichtung befestigbar ist, und wobei das Armaturenpaneel weiterhin wenigstens eine Armatur (11) mit einem Fluidanschluss (12) umfasst, wobei die Armatureneinheit weiterhin flexible Leitungen zur Verbindung des Fluidanschlusses der Armatur mit einem an einem Fluid-Anschlusselement (50) bereitgestellten Fluidanschluss (73) umfasst.

10. Grundelement (20) für eine Montagevorrichtung gemäss einem der vorstehenden Ansprüche, welches die ein Grundelement betreffenden Merkmale eines der vorstehenden Ansprüche aufweist.

11. Fluid-Anschlusselement (50) für eine Montagevorrichtung gemäss einem der vorstehenden auf eine Montagevorrichtung bezogenen Ansprüche, welches eine erste und eine zweite Stirnseite (65, 66) aufweist, zwischen denen eine axiale Erstreckung (57) definiert ist, wobei ausgehend von der ersten Stirnseite (65) ein in Richtung der Längserstreckung verlaufender erster Kanal (51) in dem Fluid-Anschlusselement angeordnet ist, und wobei das Fluid-Anschlusselement weiterhin an einer Aussenseite eine quer zur axialen Erstreckung verlaufende Nut (56) aufweist, welche von zwei axialen Begrenzungswänden (58, 59) begrenzt ist, und wobei sich ausgehend von der Nut ein zweiter Kanal (55) in das Fluid-Anschlusselement erstreckt, und der zweite Kanal innerhalb des Fluid-Anschlusselementes mit dem ersten Kanal in Fluidverbindung steht, derart, dass der erste Kanal und der zweite Kanal zusammen einen Durchströmungskanal ausbilden.

12. Fluid-Anschlusselement gemäss dem vorstehenden Anspruch, wobei die axialen Begrenzungswände (58, 59) auf zylindrischen Kränzen (60, 61) angeordnet sind und das Fluid-Anschlusselement ein ringförmiges Element (70) umfasst, welches die zylindrischen Kränze umgebend angeordnet ist, und welches an seiner Mantelfläche eine Anschlussöffnung (73) zwischen einer radial inneren Fläche und einer radial äusseren Fläche des ringförmigen Elementes aufweist, wobei eine fluiddichte Anordnung zwischen den zylindrischen Kränzen und dem ringförmigen Element hergestellt ist, derart, dass die Nut des Fluid-Anschlusselementes eine Fluidverbindung zwischen dem Durchströmungskanal (51, 55) des Fluid-Anschlusselementes und der Anschlussöffnung (73) des ringförmigen Elementes herstellt.

13. Fluid-Anschlusselement gemäss einem der vorstehenden auf ein Fluid-Anschlusselement bezogenen Ansprüche, wobei ausgehend von der ersten Stirnseite ein den ersten Kanal umgebender Stutzen (52) ausgebildet ist, auf dessen Aussenfläche ein Gewinde (54) angeordnet ist, und weiterhin an einem axialen Ende des Stutzens eine radiale Stufe mit einer Stirnfläche (53) ausgebildet ist, wobei insbesondere die besagte Stirnfläche die Andruckfläche bildet, und wobei insbesondere der erste Kanal zentrisch in dem Stutzen angeordnet ist.

14. Fluid-Anschlusselement gemäss einem der Ansprüche 11 oder 12, wobei ein Gewinde in dem ersten Kanal ausgebildet ist und an der den ersten Kanal umgebenden Stirnfläche die Andruckfläche ausgebildet ist.

15. Verfahren zur Montage einer Armatureneinheit gemäss Anspruch 9, an einer Fläche, umfassend
eine gewünschte Position einer Armatur auszuwählen,
die Position eines Leitungsanschlusses an der Fläche zu bestimmen, aus dem Abstand der Positionen die benötigte Befestigungsposition zu bestimmen, die der Leitungsanschluss auf dem Grundelement haben muss, damit die Armatur die gewünschte Position erreicht,
das Grundelement mit seiner Rückseite derart an die Fläche anzulegen, dass der Leitungsanschluss an der benötigten Befestigungsposition mit einer Durchgangsöffnung des Grundelementes zur Deckung kommt, und, das Fluid-Anschlusselement von der Vorderseite des Grundelementes her mit dem Leitungsanschluss zu verbinden und insbesondere zu verschrauben.
